# EUROPÄISCHE PATENTSCHRIFT

(11) **EP 1 352 618 B1**
(45) Veröffentlichungstag und Bekanntmachung des Hinweises auf die Patenterteilung: **29.08.2007**
(21) Anmeldenummer: 03005682.4
(22) Anmeldetag: 13.03.2003
(51) Int. Cl.: A61C 8/00

(54) **Set für die Herstellung eines Zahntotalersatzimplantates**
Set for making a complete tooth implant assembly
Kit pour la fabricaton d'un implant remplaçant totalement une dent

(30) Priorität: 10.04.2002 DE 10216713
(43) Veröffentlichungstag der Anmeldung: 15.10.2003
(73) Patentinhaber: ESKA Implants GmbH & Co. KG, 23556 Lübeck (DE)
(72) Erfinder: Grundei, Hans, Dr., 23558 Lübeck (DE)
(74) Vertreter: Fuchs

(56) Entgegenhaltungen:
- CH-A- 684 384
- DE-A- 4 105 165
- US-A- 4 671 768
- US-A- 5 527 183
- US-A- 5 871 358

## Beschreibung

Die vorliegende Erfindung betrifft ein Set zur Erstellung eines Zahntotalersatzimplantates.

Kernstück dieses Implantates ist stets ein Zahnwurzelimplantat. Ein derartiges Zahnwurzelimplantat ist bekannt beispielsweise aus der P 41 05 165 oder US-A-4 671 768. Es besteht im wesentlichen aus einem hohlen metallischen Schaft, der gebildet ist im wesentlichen aus einem offenen maschenförmigen Netzwerk, bei dem eine Durchbohrung im Kopf bis hin zum hohlen Schaft und eine Gewindebohrung im unteren Ende des Schaftes vorgesehen ist, in welchem ein Extraktionsgewinde schraubbar ist.

Mit dem Zahnwurzelimplantat ist eine Suprastruktur in einem konischen Klemmsitz lösbar verbunden. Die spezielle Ausgestaltung des Wurzelimplantates gestattet es grundsätzlich, nach Entfernung der Suprastruktur eine Kanüle in die bezeichnete Bohrung zu setzen und ein Antiseptikum in das Knochenlager durch das offene maschenförmige Netzwerk des Schaftes zu leiten, so daß einem möglichen Infektionsherd entgegengewirkt werden kann. Die Anbringung einer Gewindebohrung am unteren Ende des Schaftes dient dazu, im dafür notwendigen Falle ein Extraktionsgewinde eines entsprechenden Gerätes zu schrauben, nachdem selbstverständlich die Suprastruktur entfernt wurde.

Grundsätzlich allerdings ist bei dieser Ausgestaltung zu beachten, daß Knochenmaterial in das Innere des Schaftes durch das offene maschenförmige Netzwerk wächst. Dies trägt zwar nicht zur Fixation des Implantates in der Alveole bei, da diese aufgrund von Mikroscherbewegungen des Schaftes in dem knöchernen Zahnfach ohnehin nicht möglich wäre. Allerdings bewirkt diese Ausgestaltung im Laufe der Zeit, daß das Innere des Schaftes von Knochenmaterial angefüllt ist. Dies bedeutet, daß im Falle einer notwendig werdenden Extraktion oder einer Einleitung eines Antiseptikums das Schaftinnere zunächst ausgefräst werden muß, bevor die Kanüle das Antiseptikum in gewünschter Weise in das Schaftinnere einbringen kann und/oder das Extraktionsgewinde mit der Gewindebohrung am unteren Ende des Schaftes verschraubt werden kann. Auch ist die Verkeimung bei dem bekannten Zahnwurzelimplantat nicht restlos auszuschließen.

Vor diesem Hintergrund ist es nun die Aufgabe der vorliegenden Erfindung, ein Set zur Erstellung eines Zahntotalersatzimplantates anzugeben, welches die oben bezeichneten Probleme löst. Insbesondere soll mit dem Set das Prinzip der sogenannten verschlossenen Heilung Anwendung finden. Dies bedeutet, daß einer Verkeimung während des Einheilvorganges entgegengewirkt wird.

Gelöst wird diese Aufgabe durch ein Set der eingangs genannten Art mit den Bestandteilen und Merkmalen, wie sie sich aus dem Anspruch 1 ergeben. Vorteilhafte Weiterbildungen ergeben sich aus den Unteransprüchen.

Dementsprechend weist das Set neben dem schon beschriebenen Zahnwurzelimplantat eine Gewindehülse auf, welche an ihrem Fußende ein Gewinde aufweist, welches mit der Gewindebohrung am unteren Ende des Zahnwurzelimplantates verschraubbar ist. Die Gewindehülse ist mindestens so lang wie der Bereich des offenmaschigen Netzwerkes des Schaftes. Darüber hinaus weist die Gewindehülse eine Innengewindebohrung in ihrem Kopfende auf. Die Gewindehülse dient gewissermaßen als Platzhalter für ein Extraktionsgewinde bzw. für eine Kanüle, mit welcher ein Antiseptikum appliziert werden kann. Die Gewindehülse sorgt dafür, daß trotz eines Einwachsens von Knochenmaterial durch das offene maschenförmige Netzwerk der Innenkanal stets frei bleibt. Ein Ausfräsen des Schaftinneren im Falle des notwendig werdenden Eingriffs entfällt gegenüber dem Zahnwurzelimplantat gemäß dem Stand der Technik. Zwar sproßt das Knochenmaterial in das maschenförmige Netzwerk ein, findet jedoch in der Gewindehülse ein Widerlager, welches ein weiteres Eindringen in das Schaftinnere verhindert. Das Gewinde an ihrem Fußende dient als Platzhalter für ein Extraktionsgewinde. Die Längenangabe dient dazu sicherzustellen, daß das Widerlager über die gesamte Länge des offenen maschenförmigen Netzwerkes vorhanden ist. Die Innengewindebohrung in dem Kopfende der Gewindehülse dient einem weiteren Zweck, der weiter unten näher beschrieben werden wird.

Darüber hinaus ist eine Verschlußklappe vorgesehen, die in lösbarer und abdichtender Weise in die oben erwähnte Durchbohrung im Kopf des Zahnwurzelimplantates setzbar ist, durch die ein Durchgang verläuft, durch welchen hindurch eine Höhenpeilvorrichtung mit einem Führungselement setzbar ist. Die Verschlußklappe ist entsprechend den Innenkonturen der Durchbohrung komplemetär ausgebildet, d. h. es wird dadurch weitgehend sichergestellt, daß der Innenraum des Schaftes während der Einheilphase des Zahnwurzelimplantates keimfrei bleibt. Die Höhenpeilvorrichtung dient zur Anzeige der Größe, genauer der Höhe eines weiteren Teils des Sets, nämlich eines Formers, der weiter unten näher beschrieben werden wird. Die Höhenpeilvorrichtung besteht vorzugsweise aus einer Nadel, die durch die Verschlußkappe hindurch verläuft und mit einer Skala versehen ist. Der Oralchirurg kann dann aufgrund des Abstandes des Führungselementes zur Verschlußkappe aufgrund der Anzeige auf der Skala die Größe des weiteren Bauteils, des Formers, in einfacher Weise angeben.

Nach der Ausfräsung der Alveole und nach dem Einsetzen des Zahnwurzelimplantates verbleibt das Implantat zur Einheilung in der Regel etwa vier bis acht Wochen in diesem Zustand. Sollten in dieser Phase Probleme auftreten, ist es ohne weiteres möglich, die Verschlußkappe mit der Höhenpeilvorrichtung und dem Führungselement zu entfernen und die Gewindehülse wieder aus dem Schaftinneren herauszuschrauben, um beispielsweise eine Kanüle in das Innere des Schaftes zu führen und ein Antiseptikum zu applizieren.

Nach ca. vier Wochen beginnt eine zweite Phase. Hierzu sieht das Set ein Hohlskalpell vor, welches über das Führungselement der Höhenpeilvorrichtung führbar ist. Das Hohlskalpell ist im wesentlichen ein Hohlrohr mit einer frontseitigen Schneide. Das Hohlskalpell wird über das Führungselement hin zur Verschlußkappe geführt und trennt die dazwischen befindliche Gingiva auf, so daß eine Gingivascheibe vom Oralchirurgen entnommen werden kann. Aufgrund der erfolgten Höhenmessung der Dicke des Zahnfleisches zwischen Verschlußklappe und Führungselement, welche sich in der Dicke der Gingivascheibe wiederfindet, kann der Oralchirurg nun aus dem Set einen entsprechenden Former auswählen. Dieser Former wird an die Stelle der Verschlußkappe in das Zahnwurzelimplantat gesetzt, und zwar derart, daß die erwähnte Gingivascheibe zwischen dem Kopf des Zahnwurzelimplantates und dem Kopf des Formers zu liegen kommt. Der Former weist hierzu einen sich außerhalb des Zahnwurzelimplantates erweiternden Kopf auf. Dies dient dazu, die Gingivascheibe unter Kompressionsdruck zu setzen, und zwar durch Einsetzen und Verschrauben einer durch das Innere des Formers verlaufenden Gewindeschraube, die mit der Innengewindebohrung im Kopfende der Gewindehülse verschraubbar ist. Durch ein Festschrauben wird der Kompressionsdruck auf die Gingivascheibe erhöht und die Dicht - und Formwirkung wird entscheidend verbessert. Im abschließenden Schritt dieser Phase wird der Former durch einen Verschlußdeckel verschlossen. Die Zeitdauer zur Darstellung der Konstellation des Implantates beträgt etwa zehn Minuten, ist also kurz genug, damit die Gingivascheibe keinerlei Schaden nimmt. In diesem Stadium verharrt das Implantat etwa eine Woche.

Danach wird ein weiteres Teil des Sets appliziert, und zwar ein Laboranalog, das an die Stelle des Verschlußdeckels des Formers setzbar ist. Das Laboranalog findet im Stand der Technik bei Herstellung eines künstlichen Gebisses standardmäßig Anwendung. Es besteht üblicherweise aus einem veraschbaren Material, um welches herum die Suprastruktur aufgebaut wird. Aus der Einheit der plastischen Masse und des Laboranalogs entsteht ein Positivmodell für eine herzustellende Suprastruktur, welches einem Verfahren nach dem Prinzip des Wachsausschmelzens zugeführt wird. Auch in dieser Phase bleibt das Schaftinnere des erstellten Implantates keimfrei.

Schließlich weist das Set ein Adapterstück auf, welches einstückig ausgebildet ist und die Formen des Formers und des Laboranalogs miteinander verbindend in sich vereinigt. In der nächsten Phase wird dieses Adapterstück an die Stelle des Formers gesetzt. Beispielsweise besteht das Adapterstück einstückig aus Metall. Aufgrund des Ausschmelzverfahrens paßt die so gewonnene Suprastruktur dann auf die entsprechende metallische Form des Laboranalogs als Suprastruktur. Das Adapterstück weist eine Durchbohrung mit kopfseitig eingebrachtem Innengewinde auf. Mit dem Innengewinde verschraubbar ist ein letztes Teil des Sets, nämlich ein mit diesem lösbar verbindbares Verschlußstück. Dieses Verschlußstück kann beispielsweise in Form einer Madenschraube ausgebildet sein.

In jeder der erwähnten Aufbauphasen des Gesamtimplantates ist das Innere des Implantates vor einem Eindringen von Keimen geschützt. Sollte es doch einmal notwendig sein, eine Ausspülung mit einem Antiseptikum vornehmen zu müssen, so läßt sich das Implantat in jeder Phase durch Aufschrauben in mehreren Stufen öffen und das Antiseptikum applizieren.

Weitere Einzelheiten sowie vor allem die Vorgehensweise des Chirurgen beim Aufbau des Zahntotalersatzimplantates wird näher anhand der Darstellungen in den Zeichnungsfiguren erläutert. Hierbei zeigt:
- Figur 1:: Eine schematische Schnittansicht des Implantates in einer ersten Phase,
- Figur 2:: das Implantat in der zweiten Phase,
- Figur 3:: das Implantat in der dritten Phase
- Figur 4:: das Zahntotalersatzimplantat in der Abschlußphase.

Nachfolgend bezeichnen gleiche Bezugszeichen gleiche Teile.

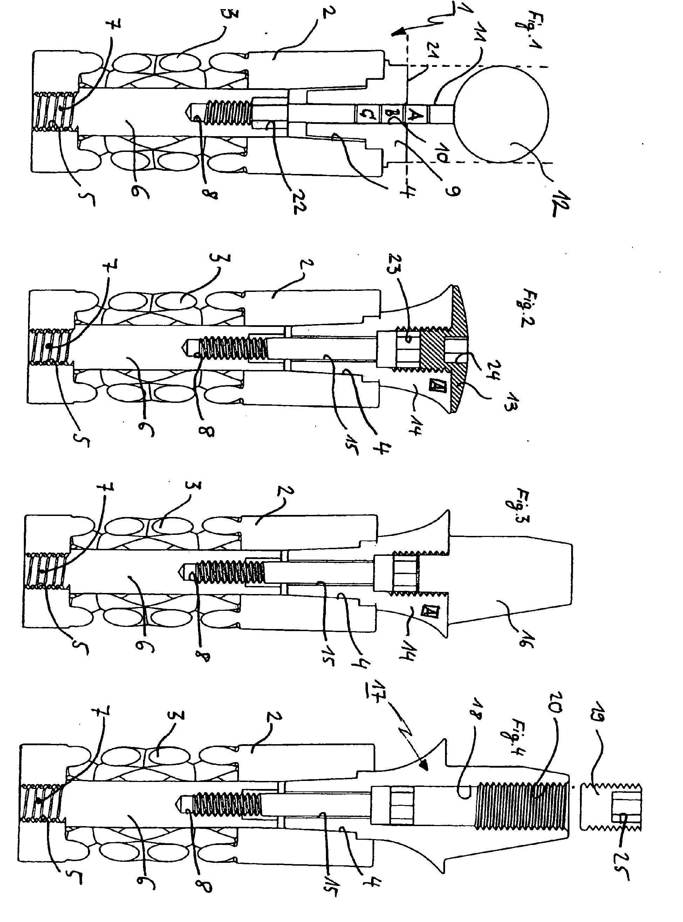

Figur 1 zeigt das Implantat nach der ersten Phase nach dessen Aufbau. Hauptbestandteil ist das Zahnwurzelimplantat 1, welches aus einem hohlen metallischen Schaft 2 besteht. Dieser ist im wesentlichen aus einem offenen maschenförmigen Netzwerk 3 gebildet. Das Wurzelimplantat 1 weist in seinem Kopf eine Durchbohrung 4 bis hin zum hohlen Schaft sowie eine Gewindebohrung 5 im unteren Ende des Schaftes auf. In letzterer Gewindebohrung ist ein Extraktionsgewinde (nicht dargestellt) schraubbar. In dieser Phase ist, als Platzhalter hierfür, aber ein Gewinde 7 geschraubt, welche zu der Gewindehülse 6 gehört. Die Gewindehülse 6 weist eine glatte Oberfläche auf einer Länge auf, die wenigstens so groß ist wie die Länge des Bereichs des maschenförmigen Netzwerks 3. In ihrem Kopfende weist die Gewindehülse 6 eine Innengewindebohrung 8 auf. In die Durchbohrung 4 ist eine Verschlußklappe 9 lösbar und in abdichtender Weise in den Kopf des Zahnwurzelimplantates 1 gesetzt. Die Verschlußkappe 9 weist einen Durchgang 10 auf, durch welchen hindurch eine Höhenpeilvorrichtung 11, hier in Form einer Nadel mit einer Skala und einem sich daran anschließenden Führungselement 12, verläuft.

Das Führungselement 12, hier in Form einer Kugel, weist exakt denselben Durchmesser auf wie ein an der Verschlußkappe 9 ausgebildetes Plateau 21, wie dies durch strichlinierte Linien angedeutet ist. Der Operateur setzt die Höhenpeilvorrichtung 11 von oben her in den Durchgang 10 in der Verschlußkappe 9, so lange, bis das Führungselement 12 auf dem Zahnfleisch zu liegen kommt. Die Skala der Höhenpeilvorrichtung 11 dient dem Operateur nun dazu, die Größe eines später zu verwendenden Bauteils, nämlich des Formers 14, anzugeben, beispielsweise in den Größen "A", "B" oder "C". Im dargestellten Fall würde die Skala der Höhenpeilvorrichtung 11 die Größe "A" für den Former vorgeben, da die entsprechende Markierung auf der Höhe des Plateaus 21 liegt. Zur Veranschaulichung wird angegeben, daß das Führungselement 12 in Form einer Kugel etwa die Größe eines Stecknadelknopfes innehat.

Das so erstellte Implantat verharrt etwa vier Wochen in situ zur Einheilung. Sodann wird die nächste Phase des Aufbaus des Zahntotalersatzimplantates eingeleitet.

Die nächste Phase beginnt dadurch, daß über das Führungselement 12 und über das Plateau 21 ein Hohlskalpell (nicht dargestellt) geführt wird, um eine Scheibe des Zahnfleisches zwischen Führungselement und Plateau 21 gewissermaßen auszustanzen. Sodann wird die Verschlußklappe 9 und die Höhenpeilvorrichtung 10 entfernt, die Gingivascheibe auf den Kopf des Zahnwurzelimplantates 1 gesetzt und das weitere Bauteil, der Former 14 (hier der Größe "A") an die Stelle gesetzt, wo vorher die Verschlußkappe 9 in dem Zahnwurzelimplantat 1 untergebracht war. Der Former 14 ist rückseitig mit einem konischen Steckzapfen versehen, der mit der im oberen Bereich der Durchbohrung 4 ausgebildeten konischen Steckhülse in einen konischen Klemmsitz gebracht wird. Durch das Innere des Formers 14 erstreckt sich als zusätzliches Arretierungsmittel eine Gewindeschraube 15, die von oben her mit der Innengewindebohrung 8 in der Gewindehülse 6 verschraubbar ist unter Kompression der zwischen dem Kopf des Formers 14 und dem Kopfende des Zahnwurzelimplantates 1 gelegenen Zahnfleischscheibe (nicht dargestellt). Zu diesem Zwecke weist der Former 14 eine sich außerhalb des Zahnwurzelimplantates 1 erweiternden Kopf auf. Nach Verschraubung des Formers 14 mit dem Wurzelimplantat 1 wird der Former 14 durch einen Verschlußdeckel 13 lösbar verschlossen. Auch hierdurch wird einer Verkeimung des Inneren des Implantates entgegengewirkt.

In dieser Konstellation verharrt das Implantat etwa eine Woche, bevor die nächste Phase des Aufbaus des Zahntotalersatzimplantates beginnt.

In der nächsten Phase wird zunächst der Verschlußdeckel 13 des Formers 14 entfernt und ersetzt durch ein Laboranalog 16, das einfach in den Former 14 steckbar ist. Das Laboranalog 16 besteht aus einem veraschbaren Material. Wohingegen bislang der Oralchirurg tätig war, kann nun der Zahntechniker in bewährter und bekannter Art um das Laboranalog herum die gewünschte Suprastruktur aufbauen, wonach dann das Laboranalog 16 in einem Wachsausschmelzverfahren entfernt wird. In der nächsten Phase dann wird das Zahntotalersatzimplantat komplettiert.

Die nächste Phase wird dadurch eingeleitet, daß der Former 14 vom Zahnwurzelimplantat 1 gelöst wird durch Aufschrauben der Gewindeschraube 15. Der Former 14 wird nun ersetzt durch ein Adapterstück 17, welches einstückig ausgebildet ist und die Formen sowohl des Formers 14 als auch des Laboranalogs 16 miteinander verbindend in sich vereinigt. Mit anderen Worten hat das Adapterstück 17 dieselben Außenkonturen wie der Former 14 mit eingesetztem Laboranalog 16 gemäß Figur 3, ist allerdings einstückig und meist aus Metall gefertigt. Das Adapterstück 17 wird wie der Former 14 mit der Gewindeschraube 15 wieder mit dem Zahnwurzelimplantat 1 verschraubt. Aufgrund des Wachsausschmelzverfahrens ist nun gewährleistet, daß die hergestellte Suprastruktur (nicht dargestellt) auf das Adapterstück 17 paßt.

Das Adapterstück 17 weist eine Durchbohrung 18 mit kopfseitig eingebrachtem Innengewinde 20 auf. Mit diesem Innengewinde 20 ist das lösbar mit diesem verbindbare Verschlußstück 19, hier eine Madenschraube, verbindbar. Nach Herstellung dieser Verbindung ist das Zahntotalersatzimplantat aus dem Set zum Erstellen desselben beendet.

Die Werkzeugansätze 22, 23, 24 und 25 für ein entsprechendes Werkzeug sind als Innensechskant ausgebildet zur Erzeugung höherer Drehmomente als im Falle eines einfachen Schlitzes oder eines Kreuzschlitzes.

## Patentansprüche

1. Set zur Erstellung eines Zahntotalersatzimplantates, aufweisend
- ein Zahnwurzelimplantat (1) aus einem hohlen metallischen Schaft (2), der gebildet ist im wesentlichen aus einem offenen maschenförmigen Netzwerk (3), bei dem eine im Ansatz als konische Klemmhülse ausgebildete Durchbohrung (4) im Kopf bis hin zum hohlen Schaft und eine Gewindebohrung (5) im unteren Ende des Schaftes vorgesehen ist, in welche ein Extraktionsgewinde schraubbar ist,
- eine Gewindehülse (6), welche an ihrem Fußende ein Gewinde (7) aufweist, welches mit der Gewindebohrung (5) im unteren Ende des Zahnwurzelimplantates verschraubbar ist, mit einer Länge, die mindestens der Länge des Bereichs des offenen maschenförmigen Netzwerkes (3) entspricht, und mit einer Innengewindebohrung (8) im Kopfende,
- eine Verschlusskappe (9), die in lösbarer und abdichtender Weise in die Durchbohrung (4) im Kopf des Zahnwurzelimplantates setzbar ist und durch die ein Durchgang (10) verläuft, durch welchen hindurch eine Höhenpeilvorrichtung (11) mit einem Führungselement (12) setzbar ist,
- ein Hohlskalpell, welches über das Führungselement (12) der Höhenpeilvorrichtung (11) führbar ist,
- einen mittels eines Verschlussdeckels (13) lösbar verschließbaren Former (14), der an die Stelle der Verschlusskappe (9) in die Durchbohrung (4) im Kopf des Zahnwurzelimplantates setzbar und in einen konischen Klemmsitz bringbar ist mit einem sich außerhalb des Zahnwurzelimplantates erweiternden Kopf, bei dem durch sein Inneres eine Gewindeschraube (15) setzbar ist, die mit der Innengewindebohrung (8) im Kopfende der Gewindehülse (6) verschraubbar ist,
- ein Laboranalog (16), das an die Stelle des Verschlussdeckels (13) des Formers (14) setzbar ist,
- ein Adapterstück (17), welches einstückig ausgebildet ist und die Formen des Formers (14) und des Laboranalogs (16) miteinander verbindend in sich vereinigt, welches an die Stelle des Formers (14) setzbar ist eine Durchbohrung (18) mit kopfseitig eingebrachtem Innengewinde (20) aufweist, und
- ein mit dem Innengewinde (20) im Adapterstück (17) lösbar verbindbares Verschlussstück (19).

2. Set nach Anspruch 1, bei dem die Durchbohrung (4) im Kopf des Zahnwurzelimplantates (1) eine Stufenbohrung ist und die Verschlusskappe (9) komplementär dazu ausgebildet ist.

3. Set nach Anspruch 1 oder 2, welches das Führungselement (12) enthält, wobei das Führungselement (12) als Kugel ausgebildet ist.

4. Set nach Anspruch 1 oder 2, welches das Führungselement (12) enthält, wobei das Führungselement (12) als Zylinder ausgebildet ist.

5. Set nach Anspruch 3 oder 4, bei dem die Verschlusskappe (9) ein Plateau (21) mit demselben oder kleineren Durchmesser aufweist wie das Führungselement (12).

6. Set nach einem der Ansprüche 1 bis 5, das die Höhenpeilvorrichtung (11) enthält wobei die Höhenpeilvorrichtung (11) als Nadel mit einer Skala ausgebildet ist.

7. Set nach einem der Ansprüche 1 bis 6, bei dem ein Werkzeugansatz (22) zum Verschrauben der Gewindehülse (6) mit der Gewindebohrung (5) im unteren Ende des Zahnwurzelimplantates (1) als Innensechskant ausgebildet ist.

8. Set nach einem der Ansprüche 1 bis 7, das die Gewindeschraube (15) enthält, wobei ein Werkzeugansatz (23) zum Verschrauben der Gewindeschraube (15) mit der Innengewindebohrung (8) im Kopfende der Gewindehülse (6) als Innensechskant ausgebildet ist.

9. Set nach einem der Ansprüche 1 bis 8, das den Verschlussdeckel (13) enthält, wobei ein Werkzeugansatz (24) im Verschlussdeckel (13) zum Verschließen des Formers (14) mittels einer Schraubverbindung als Innensechskant ausgebildet ist.

10. Set nach einem der Ansprüche 1 bis 9, bei dem ein Werkzeugansatz (25) des Verschlussstückes (19) zum Verschrauben mit dem Innengewinde (20) im Adapterstück (17) als Innensechskant ausgebildet ist.

11. Set nach einem der Ansprüche 7 bis 10, bei dem die Werkzeugansätze (22, 23, 24, 25) dieselbe Schlüsselweite aufweisen.

12. Set nach einem der Ansprüche 1 bis 11, bei dem das Laboranalog (16) mittels einer Steckverbindung mit dem Former (14) verbindbar ist.

## Claims

1. A set for making a complete tooth implant assembly, comprising
- a tooth root implant (1) consisting of a hollow metal shaft (2) which is formed substantially of an open mesh-like network (3), in which a through-bore (4), which is designed in the socket as a conical clamping sleeve, is provided at the top and extends to the hollow shaft, and a threaded bore (5) is provided in the lower end of the shaft, into which an extraction thread can be screwed,
- a threaded sleeve (6) which has at its bottom end a thread (7) which can be screwed into the threaded bore (5) in the lower end of the tooth root implant, said threaded sleeve having a length which corresponds at least to the length of the region of the open mesh-like network (3) and having an internal threaded bore (8) at the top end,
- a closure cap (9) which can be inserted in a releasable and sealing manner into the through-bore (4) in the top of the tooth root implant and through which a passage (10) runs, through which passage a height indicator device (11) can be inserted with a guide element (12),
- a hollow scalpel which can be guided via the guide element (12) of the height indicator device (11),
- a former (14) which can be releasably closed by means of a closure cover (13) and which can be inserted instead of the closure cap (9) into the through-bore (4) in the top of the tooth root implant and can be brought into a conical clamping fit with a head which widens outside the tooth root implant, through the interior of which there can be inserted a threaded screw (15) which can be screwed into the internal threaded bore (8) in the top end of the threaded sleeve (6),
- a laboratory analog (16) which can be inserted instead of the closure cover (13) of the former (14),
- an adapter piece (17) which is formed in one piece and joins together the shapes of the former (14) and of the laboratory analog (16), which adapter piece can be inserted instead of the former (14) and has a through-bore (18) with an internal thread (20) at the top end, and
- a closure piece (19) which can be releasably connected to the internal thread (20) in the adapter piece (17).

2. The set according to claim 1, in which the through-bore (4) in the top of the tooth root implant (1) is a stepped bore and the closure cap (9) is designed in a manner complementary thereto.

3. The set according to claim 1 or 2, which contains the guide element (12), wherein the guide element (12) is designed as a ball.

4. The set according to claim 1 or 2, which contains the guide element (12), wherein the guide element (12) is designed as a cylinder.

5. The set according to claim 3 or 4, in which the closure cap (9) has a plateau (21) with the same diameter as or a smaller diameter than the guide element (12).

6. The set according to any one of claims 1 to 5, which contains the height indicator device (11), wherein the height indicator device (11) is designed as a needle with a scale:

7. The set according to any one of claims 1 to 6, in which a tool socket (22) for screwing the threaded sleeve (6) to the threaded bore (5) in the lower end of the tooth root implant (1) is designed as a hexagonal socket.

8. The set according to any one of claims 1 to 7, which contains the threaded screw (15), wherein a tool socket (23) for screwing the threaded screw (15) to the internal threaded bore (8) in the top end of the threaded sleeve (6) is designed as a hexagonal socket.

9. The set according to any one of claims 1 to 8, which contains the closure cover (13), wherein a tool socket (24) in the closure cover (13) for closing the former (14) by means of a screw connection is designed as a hexagonal socket.

10. The set according to any one of claims 1 to 9, in which a tool socket (25) of the closure piece (19) for screwing it to the internal thread (20) in the adapter piece (17) is designed as a hexagonal socket.

11. The set according to any one of claims 7 to 10, in which the tool sockets (22, 23, 24, 25) have the same key width.

12. The set according to any one of claims 1 to 11, in which the laboratory analog (16) can be connected to the former (14) by means of a plug-in connection.

## Revendications

1. Kit pour la fabrication d'un implant remplaçant totalement une dent, présentant
- un implant de racine de dent (1) qui se compose d'une tige métallique creuse (2) qui est essentiellement formé d'un réseau ouvert en forme de maille (3) pour lequel une perforation (4) formée comme douille de serrage conique à l'embase est prévue dans la tête jusqu'à la tige creuse et un alésage fileté (5) dans lequel un filetage d'extraction peut être vissé est prévu dans l'extrémité inférieure de la tige.
- une douille filetée (6) qui présente à l'extrémité de son pied un filetage (7) qui peut être vissé dans l'alésage fileté (5) dans l'extrémité inférieure de l'implant de racine de dent, douille ayant une longueur au moins égale à la longueur de la zone du réseau ouvert en forme de maille (3), et avec un alésage taraudé (8) dans l'extrémité de la tête,
- un capuchon (9) qui peut être placé de manière amovible et étanchéifiante dans la perforation (4) dans la tête de l'implant de racine de dent et qui est traversé par un passage à travers lequel peut être placé un dispositif de repérage de hauteur avec un élément de guidage (12),
- un scalpel creux qui peut être guidé au moyen de l'élément de guidage (12) du dispositif de repérage de hauteur (11),
- un formeur (14) pouvant être obturé de manière amovible au moyen d'un couvercle de fermeture (13), formeur qui peut être placé au lieu du capuchon (9) dans la perforation (4) dans la tête de l'implant de racine de dent et peut être amené dans un logement à pincement conique avec une tête s'étendant hors de l'implant de racine de dent dans lequel une vis (15) peut être placée à travers son intérieur, vis qui peut être vissée dans l'alésage taraudé (8) dans l'extrémité de tête de la douille filetée (6),
- un analogue de laboratoire (16) qui peut être placé au lieu du couvercle de fermeture (13) du formeur (14),
- un élément adaptateur (17) qui est formé en une seule pièce et qui réunit en soi les formes du formeur (14) et de l'analogue de laboratoire (16) en les reliant l'un avec l'autre, adaptateur qui peut être placé au lieu du formeur (14) et présente une perforation (18) avec filet intérieur (20) réalisé côté tête, et
- un élément obturateur (19) qui peut être relié de manière amovible au filetage intérieur (20) se trouvant dans l'élément adaptateur (17).

2. Kit selon la revendication 1, dans lequel la perforation (4) dans la tête de l'implant de racine de dent (1) est un alésage étagé et le capuchon (9) est formé de manière complémentaire à ce dernier.

3. Kit selon la revendication 1 ou 2, qui comprend l'élément de guidage (12), étant donné que l'élément de guidage (12) est formé comme sphère.

4. Kit selon la revendication 1 ou 2, qui comprend l'élément de guidage (12), étant donné que l'élément de guidage (12) est formé comme cylindre.

5. Kit selon la revendication 3 ou 4, dans lequel le capuchon (9) présente un plateau (21) avec un diamètre égal ou inférieur à celui de l'élément de guidage (12).

6. Kit selon l'une quelconque des revendications 1 à 5, qui comprend le dispositif de repérage de hauteur (11), étant donné que le dispositif de repérage de hauteur (11) est formé comme aiguille avec une graduation.

7. Kit selon l'une quelconque des revendications 1 à 6, dans lequel une embase d'outil (22) pour le vissage de la douille filetée (6) avec l'alésage fileté (5) dans l'extrémité inférieure de l'implant de racine de dent (1) est formé comme six pans creux.

8. Kit selon l'une quelconque des revendications 1 à 7 qui contient la vis (15), étant donné qu'une embase d'outil (23) pour le vissage de la vis (15) avec l'alésage taraudé (8) dans l'extrémité de tête de la douille filetée (6) est formée comme six pans creux.

9. Kit selon l'une quelconque des revendications 1 à 8 qui contient le couvercle de fermeture (13), étant donné qu'une embase d'outil (24) dans la vis (13) pour la fermeture du formeur (14) par raccord vissé est formée comme six pans creux.

10. Kit selon l'une quelconque des revendications 1 à 9, dans lequel une embase d'outil (25) de l'élément obturateur (19) pour le vissage avec la douille filetée (20) dans l'élément adaptateur (17) est formé comme six pans creux.

11. Kit selon l'une quelconque des revendications 7 à 10, dans lequel les embases d'outils (22, 23, 24, 25) ont la même ouverture de clé.

12. Kit selon l'une quelconque des revendications 1 à 11, dans lequel l'analogue de laboratoire peut être relié au formeur (14) au moyen d'un connecteur mâle-femelle.
